# EUROPEAN PATENT APPLICATION

(11) **EP 4 470 915 A1**
(43) Date of publication of application: **04.12.2024**
(21) Application number: 23216257.8
(22) Date of filing: 23.05.2023
(51) Int. Cl.: B64C 27/12, F16D 3/205, B64C 29/00

(54) **TRANSMISSION JOINT FOR A ROTOR COMPRISING A PLURALITY OF BLADES**

(62) Divisional of application: 23174771.8
(71) Applicant: Leonardo S.p.a., 00195 Roma (IT)
(72) Inventor: RUTILIO, Alessandro, 21017 SAMARATE (VA) (IT); GOZZINI, Luca, 21017 SAMARATE (VA) (IT); D'ANDREA, Andrea, 21017 SAMARATE (VA) (IT)
(74) Representative: Studio Torta S.p.A.

(57) **Abstract**

An articulated transmission joint (20; 20'; 20") for connecting a drive shaft (10) to a hub (15) of a rotor (8, 8', 8"), comprising: a first element (45, 45', 45") rotatable about a first axis (C); a second element (50, 51, 52; 50", 51", 52") rotatable about a second axis (D); and connecting means (60, 60', 60") to allow transmitting the motion between the first and the second element (45, 45', 45"; 50, 51, 52; 50", 51", 52") of a torque having a main component along the first axis (C) and a torque having a main component along the second axis (D); the connecting means (60, 60', 60") comprise, a roller (54) articulated on the first element (45, 45', 45"); and a chamber (53) defined at least partially by the second element (50, 51, 52; 50", 51", 52") and housing at least partially the roller (54); the chamber (53) is delimited towards the roller (54) by a first surface (59) that contacts the roller (54) circumferentially to the first axis (C), after the rotation of the first element (45) about the first axis (C); the first and second element (45, 45', 45"; 50, 51, 52; 50", 51", 52") are coupled so as to allow a tilt of an angle (α) between the first and second axis (C, D).

## Description

The present invention relates to a transmission joint for a rotor comprising a plurality of blades.

Specifically, the transmission joint is an articulated joint for a rotor of a tilt-rotor aircraft.

The tilt-rotor aircrafts of the known-type essentially comprise:
- a fuselage extending along a first longitudinal axis;
- a pair of half-wings stretching in a cantilever manner from respective parts of the fuselage opposite to each other, and having respective free ends opposite to the fuselage and aligned along a second transverse axis E substantially orthogonal to the first longitudinal axis; and
- a pair of nacelles carrying respective powerplants, each formed by a respective motor and a respective rotor.

Each rotor is rotatable about a relative third axis.

The tilt-rotor aircrafts are also able to selectively assume:
- an "airplane" configuration, wherein the rotors are arranged with respective third axes substantially parallel to the first axis of the tilt-rotor aircraft itself and define respective powerplants of the tilt-rotor aircraft itself; or
- a "helicopter" configuration, wherein the rotors are arranged with the respective third axes substantially vertical and transverse to the first axis of the tilt-rotor aircraft.

Each rotor comprises, as known:
- a control shaft driven to rotate about the relative third axis by the relative motor;
- a hub rotatable about a fourth axis, and provided with a central portion operatively connected to the control shaft and a plurality of radial arms projecting from the central portion radially opposite the fourth axis; and
- a plurality of blades articulated on respective arms of the hub and generating, as a result of the rotation integral with the hub, a resulting aerodynamic force directed in first approximation parallel to the fourth axis.

This aerodynamic force balances the weight of the tilt-rotor aircraft in the "helicopter" configuration and provides the necessary thrust for the wings to develop the required lift in the "aeroplane" configuration.

Each rotor also comprises an articulated transmission joint, interposed between the control shaft and the hub.

The articulated transmission joint must thus allow the transmission of the torque generated by the control shaft to the hub and the aerodynamic force from the hub to the control shaft, and from the latter to the fuselage.

The articulated transmission joint is also designed to allow the fourth axis of the hub of the tilt-rotor aircraft to oscillate in relation to the third axis of the control shaft for a given maximum angle.

Said oscillations are due to the aerodynamic not perfectly symmetrical forces acting on the blades, for example due to a gust or to the variation of the cyclic pitch of the blades. Alternatively, such oscillations are generated in case of transition of the tilt-rotor aircraft between the "airplane" and "helicopter" configurations, or gyroscopic forces are generated in the event of storms acting on the blades.

In solutions of the known type, the articulated joint is homokinetic, i.e. the ratio between the angular speeds of the hub and the control shaft does not depend on the angular position of the latter ones.

More specifically, e.g. according to the solution described in US 4,804,352, the articulated joints of the known type comprise:
- a plate connected to the control shaft by means of a grooved profile and rotating integrally to the control shaft about the third axis; and
- a plurality of connecting elements and respective locking devices arranged substantially circumferentially to the third axis.

Each connecting element comprises, in turn, a first and a second end circumferential to the third axis. Each first end and corresponding second end define respective spherical cavities within which respective elastomeric bearings are housed.

The first end of each connecting element is connected to the plate by means of a fixed connection.

The second end of each connecting element is connected to the hub by means of a respective locking device.

In this solution, the elastomeric bearings transmit both the driving torque from the control shaft to the hub and the aerodynamic forces from the hub to the control shaft.

As a result, it is necessary to hyperstatically constrain the elastomeric bearings, leading to a consequent reduction in the fatigue life and an increase in the overall cost and weight of the elastomeric bearings and, therefore, of the entire transmission joint.

Elastomeric bearings also have metal components with a reduced fatigue life, resulting in the need for frequent inspection and replacement.

Elastomeric bearings also have elastomeric material components, which show a tendency to overheat when the tilt-rotor aircraft is in flight for a prolonged period of time, resulting in the need to establish an appropriate strategy for monitoring the temperature of the elastomeric bearings.

In addition, the current articulated joint configuration makes it necessary to use a particularly long probe to visually inspect the components of the articulated joint.

There is therefore a need in the field to reduce the cost, weight and cumbersomeness of maintenance procedures and to increase the fatigue life of known-type transmission joints.

US-B-6,296,444 discloses an articulated transmission joint for a tilt-rotor aircraft.

CN-A-101973399 discloses a transmission joint for a rotor comprising a plurality of blades, according to the preamble of claim 1.

US-A-4477224 discloses a helicopter rotor including a rotor hub supporting a plurality of rotor blades, and a pitch control means comprising a universal joint adapted to permit both tilting and axial vertical movements of the control means to change the pitch of the rotor blades both cyclically and collectively. The universal joint has three radially extending pins each supporting a radially slidable and rotatable bearing having a spherical external surface, the bearings being located in generally axially extending tracks having a circular cross-sectional shape for rolling engagement by the bearings. Axial movements are permitted by rolling of the bearings along the tracks and tilting movements by a combination of rolling and a sliding movement of the bearings along the pins.

WO-A-2010128378 discloses a constant velocity joint for gimballed helicopter rotors in which the rotor hub is connected to a drive shaft (mast) by means of two opposing elastomeric laminated spherical bearings, which allow the said rotor hub to tilt on two axes, and whose upper and lower supports are located at the opposite ends of a horizontal cavity of the hub, inside which a series of improved elastomeric dragging devices have been installed that are identical to each other and which are composed of spherical bearings to which are secured - externally and internally - two elastomeric cylindrical radially laminated bearings which slide elastically on their axis, such bearings being of different sizes but, at the same time, being also characterized by the fact that they have the same longitudinal rigidity. The external bearings of these devices are lodged in appropriate annular apertures which are arranged on a flange secured to the mast, whereas the bearings that are inside the couplings are secured, by means of feathering bolts, to the hollow rotor hub. The rotor hub tilts relative to the mast also on account of the spherical couplings of the aforementioned dragging devices, whose centers - thanks to the identical rigidity of both elastomeric cylindrical bearings connected thereto - are arranged on a plane which bisects the angle between the mast flange and the rotor hub, thus creating a constant-velocity joint. This type of constant-velocity joint is used in a two- blade helicopter rotor and is also used in three-blade and multi-blade helicopter rotors in general. It is, moreover, used - in the event that constant-velocity joints are required - in generic appliances for the transmission of motion between two masts tilting towards each other.

Aim of the present invention is to realise a transmission joint for a rotor comprising a plurality of blades, which enables to meet at least one of the above needs in a simple way and cost-effectively.

According to the invention, this aim is achieved by a transmission joint for a rotor comprising a plurality of blades, as claimed in Claim 1.

For a better understanding of the present invention, one preferred non-limiting embodiments thereof are described hereinafter, purely by way of example and with the aid of the attached drawings, in which:
- Figure 1 is a side view of a tilt-rotor aircraft comprising a pair of rotors realised according to the dictates of a first embodiment shown only for illustrative purposes and in a "helicopter" configuration;
- Figures 2 and 3 show, on an enlarged scale, an axial section of one of the tilt-rotor aircraft joints in Figure 1 in a first and second operating position respectively;
- Figure 4 is an exploded view of the transmission joint of Figures 2 and 3, with parts removed for clarity;
- Figure 5 is a perspective view of the transmission joint of Figures 2 to 4, on an enlarged scale;
- Figure 6 is a further enlarged and partially sectioned perspective view of the transmission joint of Figure 5, with parts removed for clarity;
- Figure 7 is a perspective view of some components of the transmission joint of Figures 2 to 6, with parts removed for clarity and in a first operating condition;
- Figure 8 is an exploded view of the transmission joint of Figures 2 to 7, with parts removed for clarity and in a second operating condition;
- Figure 9 is a section along line IX-IX of Figure 8;
- Figures 10 and 11 show an axial section of a transmission joints of the tilt-rotor aircraft in Figure 1 according to the present invention and in a first and second operating position respectively;
- Figure 12 is an exploded view of the transmission joint of Figures 10 and 11;
- Figure 13 is a perspective view of the transmission joint of Figures 10 to 12, in an enlarged scale;
- Figure 14 is a further enlarged and partially sectioned perspective view of the transmission joint of Figure 13, with parts removed for clarity;
- Figure 15 is a perspective view of some components of the transmission joint from Figures 10 to 14, with parts removed for clarity;
- Figures 16 and 17 show a further embodiment of one of the transmission joints of the tilt-rotor aircraft of Figure 1 shown only for illustrative purposes in a first and second operating position respectively;
- Figure 18 is an exploded view of the transmission joint of Figures 16 and 17;
- Figure 19 is a perspective view of the transmission joint of Figures 16 to 18, in an enlarged scale;
- Figure 20 is a further enlarged and partially sectioned perspective view of the transmission joint of Figure 19, with parts removed for clarity; and
- Figure 21 is a perspective view of some components of the transmission joint of Figures 16 to 20, with parts removed for clarity.

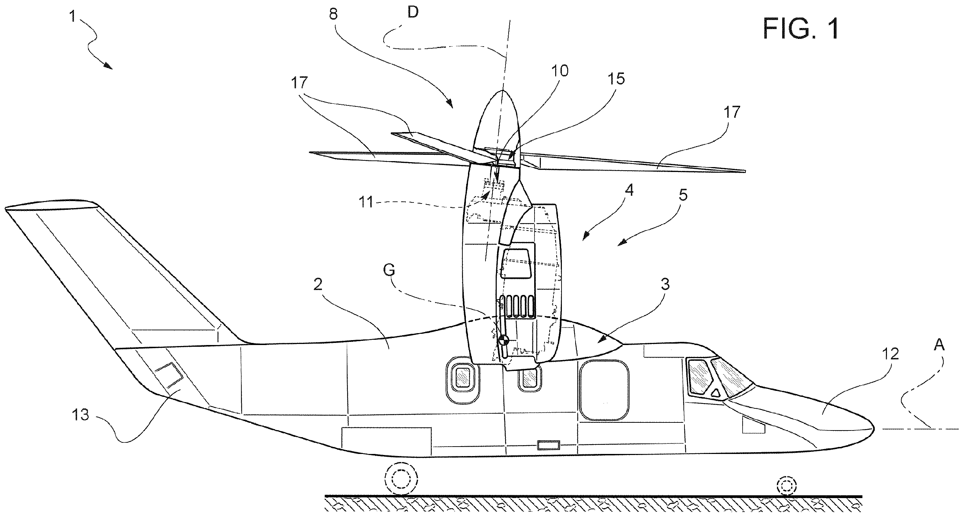

Referring to Figure 1, 1 denotes an aircraft capable of hovering, in particular a tilt-rotor aircraft.

The tilt-rotor aircraft 1 essentially comprises:
- a fuselage 2 having an axis A of longitudinal extension;
- a pair of half-wings 3 extending in a cantilever manner from respective parts opposite one another of the fuselage 2 and transversely to the axis A; and
- a pair of nacelles 4 housing respective powerplant groups 5 and tiltable with respect to the fuselage 2 about an axis G orthogonal to the axis A.

The fuselage 2 also comprises a nose 12 arranged at the front and a tail portion 13 that are opposite one another along the axis A.

The half-wings 3 have respective directions of longitudinal extension parallel to the axis G orthogonal to the axis A.

It should be noted that the term "front", "of tail", "longitudinal", "lateral", "above" and "below" and the like used in this description refer to a normal direction of advancement of the tilt-rotor aircraft 1 in forward flight.

In the following of the present description a single powerplant group 5 is described, being the powerplant groups 5 identical to each other.

The powerplant group 5 essentially comprises:
- a motor 6 provided with an output shaft rotatable about an axis B orthogonal to the axis G;
- a rotor 8; and
- a transmission unit 11 interposed between the motor output shaft 6 and a control shaft 10 of the rotor 8, so as to drive the control shaft 10 to rotate about an axis C.

In the case shown, the rotation axis of the motor output shaft 6 and the axis C are parallel and offset from each other.

The tilt-rotor aircraft 1 can be selectively arranged:
- in a "helicopter" configuration (visible in Figure 1), in which the axes C are orthogonal to the axis A; and
- in an "airplane" configuration (not shown), in which the axes C are parallel to the axis A.

The transition of the tilt-rotor aircraft 1 between the "helicopter" and "airplane" configurations is achieved by tilting the rotors 8 about the axis G.

In the case shown, the rotors 8 are tilted integrally with the nacelles 4 and with the powerplant groups 5 about the axis G during the aforesaid transition.

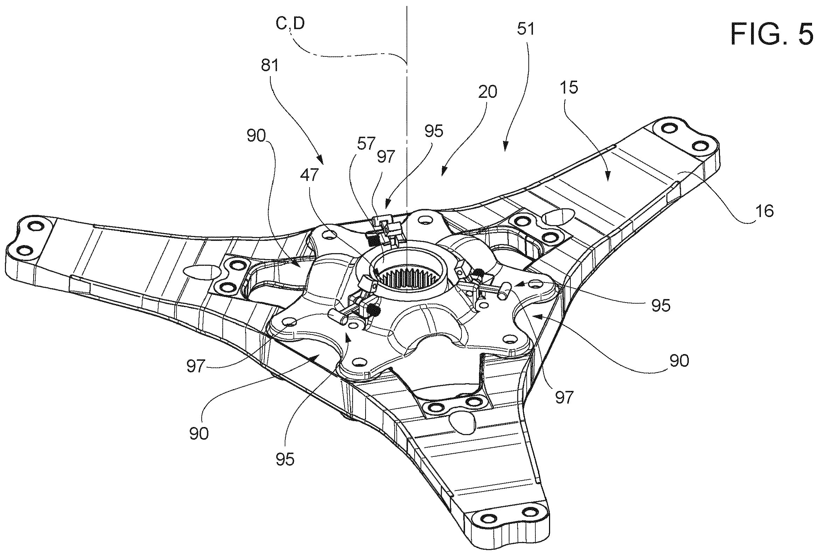

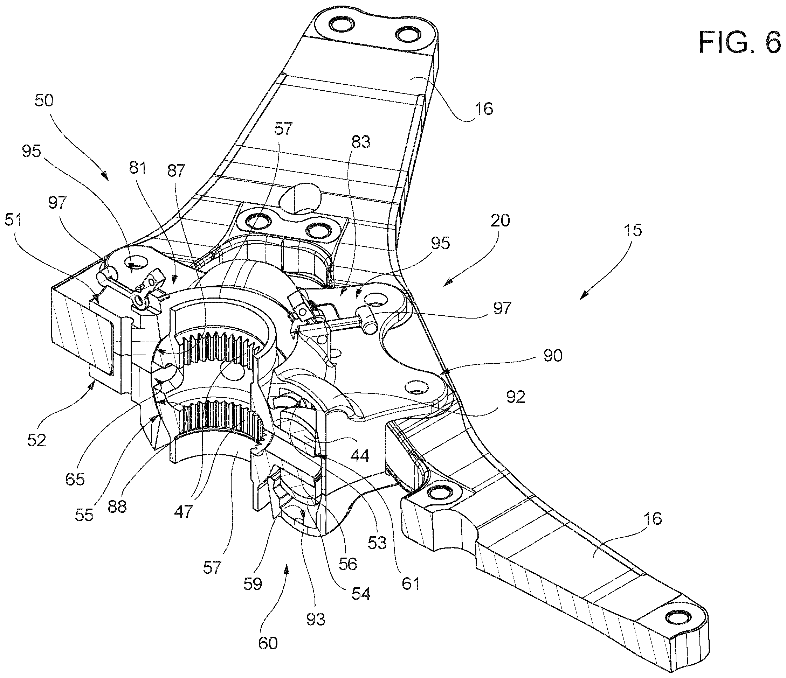

The rotor 8 in turn comprises (Figures 1 to 3):
- the control shaft 10 having an axis C;
- a hub 15 having an axis D and provided with a plurality, three in the case shown, of arms 16 extending radially to the axis D (Figures 5 and 6);
- a plurality of blades 17, three in the case shown, articulated on relative arms 16 of the hub 15; and
- a joint 20 interposed between the control shaft 10 and the hub 15.

The joint 20 is, in the case shown, a constant velocity joint configured to transmit a torque having a main component axis C from the control shaft 10 to the hub 5, and an aerodynamic force having a component parallel to the axis D from the hub 15 to the control shaft 10 and to the fuselage 2.

The joint 20 is also an articulated joint configured to allow the oscillation of the axis D of the hub 15 with respect to the axis C of the control shaft 10.

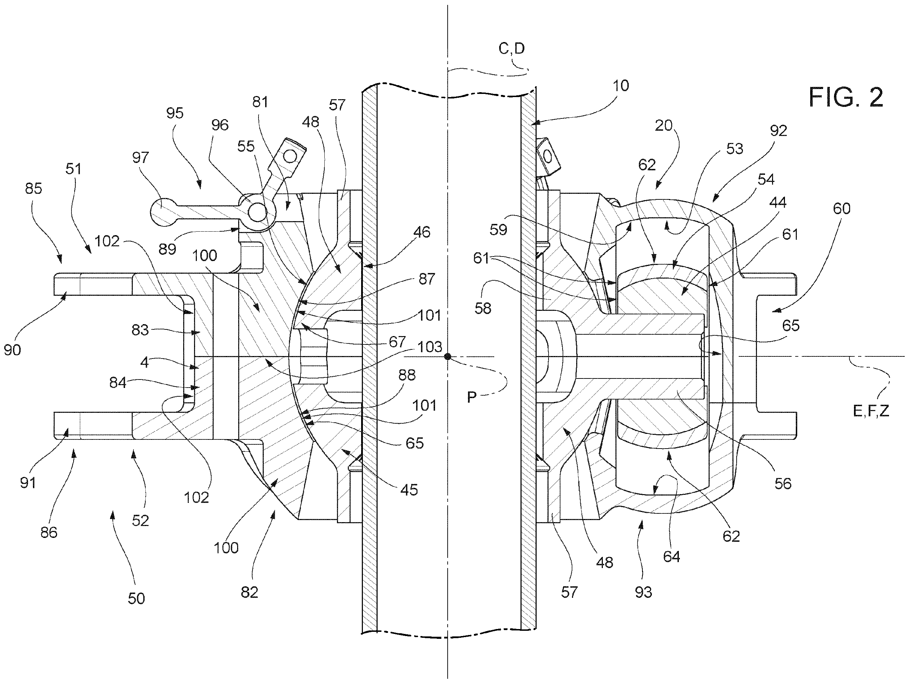

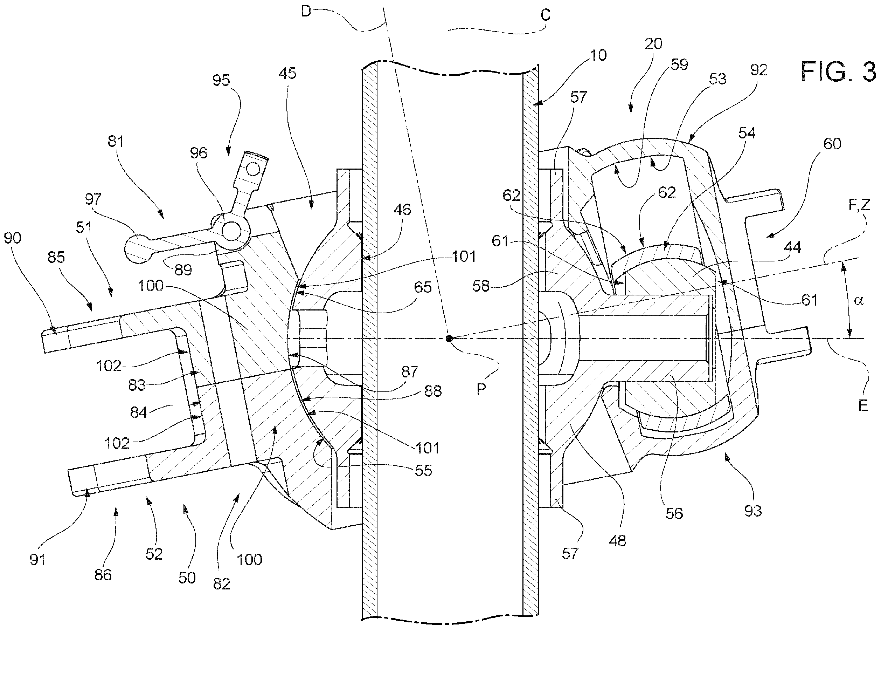

As visible in the Figures 2 and 3, the control shaft 10 and the hub 15 have respective axes E, F that are radial and orthogonal to the respective axes C, D.

The joint 20 is configured to allow the oscillation of the axis D relative the axis C - and, therefore, of the axis F about the axis E - by a variable angle α comprised between 0 degrees (Figure 2) and, in the case shown, +/-12 degrees (Figure 3).

In particular, the joint 20 is also configured to allow the oscillation of the axis D with respect to the axis C about a point P defined by the intersection of the axes C, D.

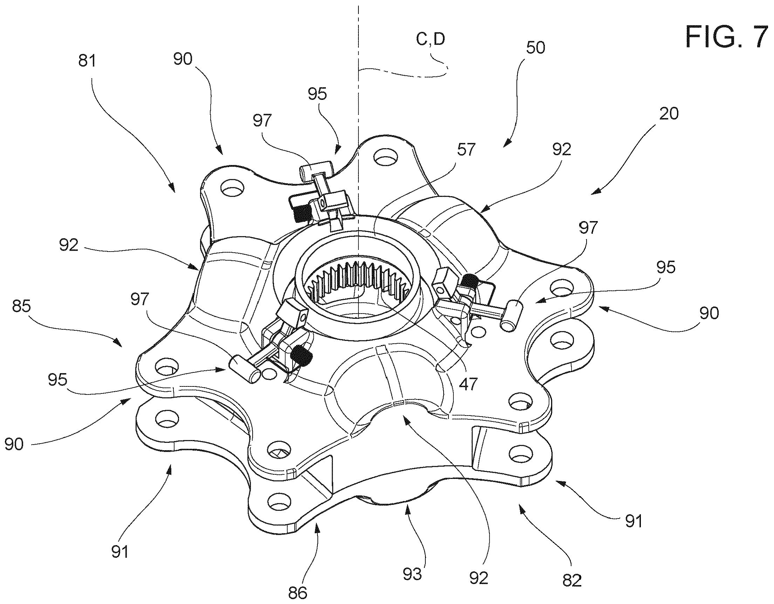

The joint 20 is not part of the present invention and comprises, in turn (Figures 2 to 7):
- an element 45 defining a cylindrical seat 46 of axis C coupled to the control shaft 10 by a pair of axially staggered grooved profiles 47 parallel to the axis C; and
- an assembly 50 connected to the hub 15 at a fixed angle relative to the axis D.

The joint 20 further comprises connecting means 60 for connecting the element 45 to the assembly 50, and configured to allow transmitting the torque having a main component along the axis C and the force having a main component along the axis D between the element 45 and the assembly 50.

The connecting means 60 comprise, in turn:
- a plurality of rollers 54, three in the case shown, carried by the element 45 and extending along their respective longitudinal axes Z; and
- a plurality of chambers 53, three in the case shown, defined by the assembly 50 and housing respective rollers 54;

each chamber 53 is circumferentially delimited towards the relative roller 54 by a surface 59, which circumferentially contacts the axis C with the relative roller 54, as a result of the rotation of the element 45 about the axis C itself;
the element 45 and assembly 50 are coupled together so that the axes B, C can be tilted by the angle α (Figure 2).

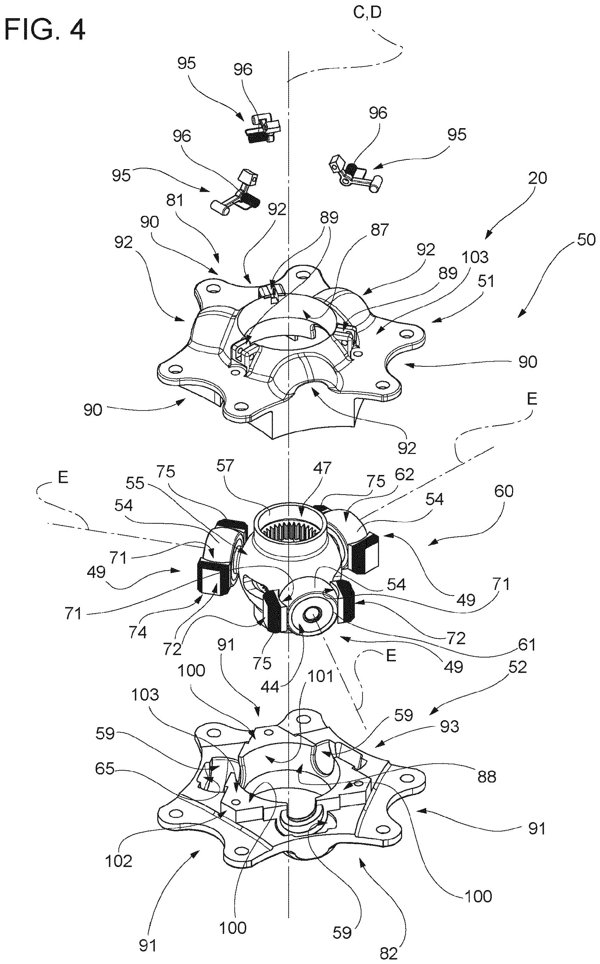

In greater detail, the element 45 comprises:
- a main tubular body 48 defining the seat 46;
- a plurality of arms 56, three in the case shown, projecting cantilevered from the main body 48 in a direction radially external to the axis C, and extending along respective axes E radial to the axis C; and
- a plurality of pairs of dampening elements 49 (Figure 4), in the case shown three pairs, each associated with a respective arm 56.

Specifically, the arms 56 are associated with respective axes E and the rollers 54 extend along respective axes Z.

The element 45 further comprises a plurality of junctions 44 mounted coaxially on respective arms 56, and interposed between the respective arms 56 and the respective rollers 54 radially to the relative axis E.

In particular, each junction 44 allows the rotation of the relative roller 54 about the relative axis E and the tilt of the axis Z of the relative roller 54 with respect to the relative axis E (Figure 3).

The dampening elements 49 of each pair are circumferentially interposed with respect to the axis D between the corresponding roller 54 and the corresponding chamber 53.

The main body 48 comprises, in turn:
- a pair of portions 57 of axial ends opposite to each other and shaped as respective cylinders of axis C; and
- a portion 58 axially interposed between the portions 57 and shaped like a spherical crown.

The portion 58 is delimited, in a position radially external to the axis C, by a surface 55 radially opposite to the seat 46.

The arms 56 protrude radially from the surface 55 on the side radially opposite the axis C.

The surface 55 is spherical, symmetrical with respect to the axis C and with a centre P.

In particular, the portion 58 has a larger axial dimension than portions 57 and has a maximum diameter that is larger than the diameters of the portions 57.

The rollers 54 and the relative arms 56 are angularly spaced about the axis C.

More precisely, the rollers 54 and the relative arms 56 are angularly equally-spaced about the axis C.

In short, each roller 54 has a tubular shape along the relative axis E.

Each roller 54 comprises, in turn:
- a pair of faces 61 of axial ends opposite to each other with respect to the relative axis Z and orthogonal to the relative axis Z; and
- a circumferential surface 62, radially external to the relative axis Z, radially opposite to the relative junction 44 and axially interposed between the faces 61.

The dampening elements 49 are, in greater detail, circumferentially interposed between respective portions of the surface 62 and the relative chamber 53.

Each dampening element 49 comprises, in particular (Figure 4):
- a concave wall 71 partially housing the relative roller 54 and radially internal with respect to the axis E;
- a wall 72 opposite the wall 71 and radially external to the axis E; and
- a pair of walls 73, 74 interposed between the walls 71, 72, opposite to each other, and lying on respective planes orthogonal to the axis E of the relative roller 54.

The wall 71 of each dampening element 49 defines a rolling track for the corresponding roller 54.

The wall 71 is made of steel.

Each dampening element 49 further comprises a plurality of foils 75 overlapping each other and interposed between the walls 71, 72.

The foils 75 are formed by alternating layers of elastomeric materials and steel.

The assembly 50 comprises a spherical surface 65 with the centre at point P sliding on the surface 55 to form a spherical hinge with the centre at point P between the hub 15 and the control shaft 10 (Figure 2).

The surface 55 comprises a portion 67 axially interposed between respective sections of the surface 55 along the axis D, so as to allow transmitting a force parallel to the axis D in both directions from the assembly 50 integral with the blades 17 to the element 45 integral with the control shaft 10.

The assembly 50 further defines the chambers 53 delimited by respective surfaces 59 and housing the corresponding rollers 54.

Each surface 59 houses the relative roller 54 with an axial clearance, a radial clearance and substantially no circumferential clearance, with reference to the axis D.

Each chamber 53 is filled with a lubricating grease.

Referring to Figure 2, each chamber 53 is axially closed in the radially internal position and closed in the radially external position, relative to the axis D.

The chambers 53 are angularly equally-spaced about the axis D.

The assembly 50 comprises, in particular (Figure 4), a pair of crankcases 51, 52 axially overlapping along the axis D, connected to each other and surrounding the element 45.

In greater detail, each crankcase 51, 52 is shaped as a tubular body of axis D.

Each crankcase 51, 52 comprises, in turn:
- a respective portion 81; 82 of axial end;
- a respective portion 83; 84 of axial end opposite to the corresponding portion 81; 82; and
- a respective flange 85, 86 axially interposed between the corresponding portions 81, 83; 82, 84.

The portions 81, 82 are shaped like spherical caps.

The portion 81 further comprises a plurality of seats 89, three in the case shown, extending radially to the axis E and arranged, in the case shown, equally-spaced about the axis E.

The seats 89 are arranged at respective planes radial to the axis E.

The portions 83, 84 comprise, in particular, a plurality of appendages 100, three in the case shown, angularly equally-spaced between each other about the axis D.

The appendages 100 protrude axially cantilevered from the respective flange 85, 86 at the axially opposite side of the respective portion 81, 82.

Each appendage 100 comprises, in particular (Figures 2 to 4) :
- a radially internal wall 101, concave and shaped as a portion of a spherical surface with a centre P;
- a plane, radially external wall 102 lying on a respective plane orthogonal to the axis E; and
- a wall 103 lying in a plane orthogonal to the axis D, axially opposite the relevant flange 85, 86, and extending between the walls 101, 102.

Each flange 85, 86 has a star-shaped design and comprises:
- a plurality of attachment elements 90, 91, six in the case shown, extending radially to the axis E and angularly equally-spaced; and
- a plurality of walls 92, 93, three in the case shown, and circumferentially alternating between a pair of respective attachment elements 90, 91 consecutive to each other, proceeding about the axis D.

The walls 92, 93 are angularly equally-spaced about the axis E.

Each wall 92, 93 is axially closed on the side of the relative portion 81, 82, circumferentially closed and axially open on the side of the relative portion 83, 84.

The walls 92, 93 have respective semi-cylindrical portions that are coaxial to the axis F and each having a shape corresponding to a half of the corresponding roller 54.

The walls 92, 93 protrude from the attachment elements 90, 91 on the side of the relative portion 81, 82.

Referring to the axis D, the wall 92 is axially open towards the portion 82, axially closed towards the portion 81 and circumferentially closed.

Referring to Figure 4, the wall 92 is radially open both towards the axis E and towards the side opposite the axis E.

The wall 93 is radially closed in the direction opposite the axis E and open in the direction of the axis E.

The walls 92, 93 have respective axial ends connected to each other.

The wall 92 extends towards the wall 93 beyond the axis E.

Each crankcase 51, 52 further comprises a related surface 87, 88 radially internal and coupled with the surface 55 of the element 50.

The surfaces 87, 88 are spherical a centre P.

The surfaces 87, 88 define the surface 65 of the assembly 50.

The surfaces 87, 88 comprise the respective walls 101 of the corresponding appendages 100 and the radially inner walls of the flanges 85, 86.

The portion 67 of the surface 55 is axially interposed, at least partially, between the surfaces 87, 88 along the axis D, so as to allow transmitting a force parallel to the axis D in both directions from the assembly 50 integral with the blades 17 to the element 45 integral with the control shaft 10.

The attachment elements 90, 91 and the portions 83, 84 are connected to each other, so as to connect the crankcases 51, 52 to each other and form the assembly 50.

The portions 83, 84 are axially overlapping and consecutive to each other parallel to the axis D, and axially interposed between the corresponding portions 81, 82.

Each wall 92 of the crankcase 51 is axially overlapping on a relative wall 93 of the crankcase 52, so as to form a respective surface 59 of a corresponding chamber 53.

The joint 20 further comprises a plurality of stop elements 95 (Figures 2 to 9) carried by the crankcase 51 and configured to abut against a fixed structure relative to the control shaft 10, so as to limit the value of the angle α to a maximum threshold value.

Each stop element 95 comprises, in particular:
- a pin 96 fixed within the respective seat 89; and
- an abutment element 97 integral with the pin 96 and adapted to abut against the fixed structure when the angle α reaches the maximum threshold value.

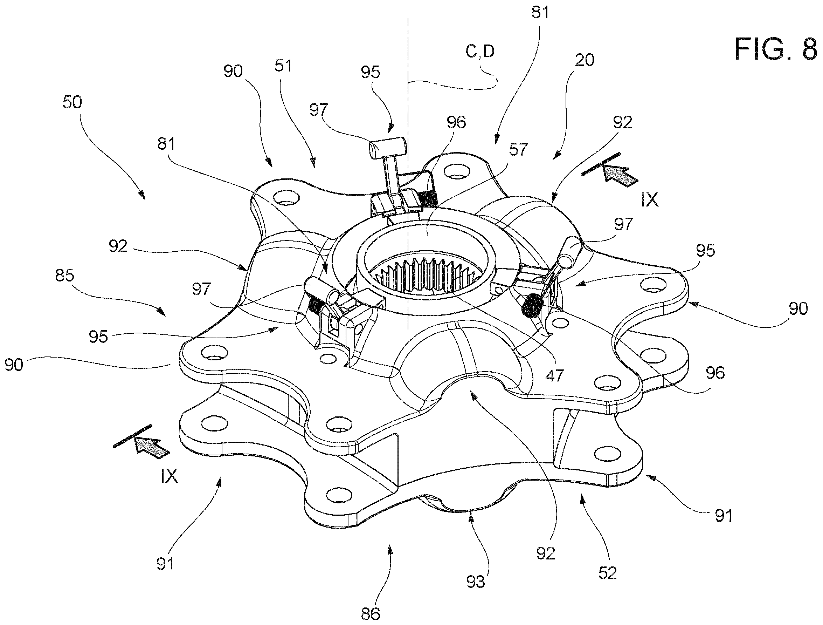

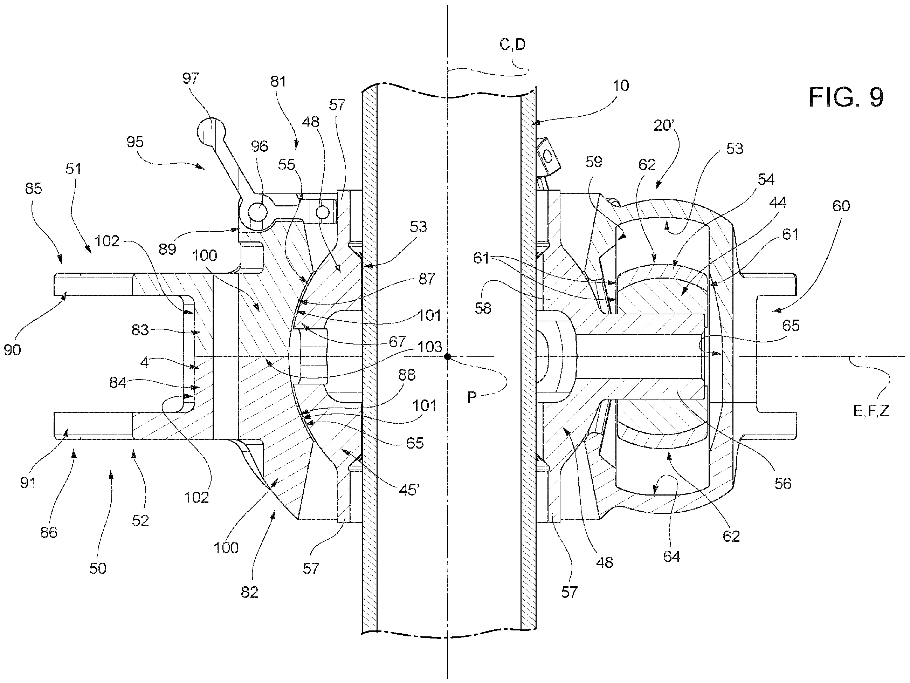

Each stop element 95 is selectively available in:
- a first position (shown in Figures 2 to 7) wherein the abutment elements 97 define a first angle with the axis D; and
- a second position (shown in Figures 8 and 9) wherein the abutment elements 97 define a second angle with the axis D lower than the first angle.

The stop elements 95 are arranged in the respective first positions when the tilt-rotor aircraft 1 is in flight.

The stop elements 95 are arranged in the respective second positions when the tilt-rotor aircraft 1 is on the ground.

In use, the tilt-rotor aircraft 1 lands and takes off in the "helicopter" configuration and advances in the "airplane" configuration.

In both configurations, the motors 6 drive the rotors 8 to rotate about the respective axes D.

More specifically, each motor 6 drives the relative control shaft 10 to rotate about the relative axis C.

The control shaft 10 drives the hub 15 and blades 17 to rotate about the axis D by means of the joint 20.

The blades 17 thus generate an aerodynamic force having a main component parallel to the axis D.

In the hovering or low-speed "helicopter" configuration, the rotors 8 are arranged with the respective axes D orthogonal to the axis A (Figure 1).

The aerodynamic force generated by the blades 17 of each rotor 8 supports the tilt-rotor aircraft 1 in flight.

In the "aeroplane" configuration, not shown, the rotors 8 are arranged with the respective axes D parallel to the axis A. The aerodynamic force generated by the blades 17 of the rotors 8 provides the thrust required to move the tilt-rotor aircraft 1 forward and the lift required to support the tilt-rotor aircraft 1 is mostly provided by the half-wings 3.

In greater detail, the joint 20 is homokinetic, i.e. the ratio between the rotation speeds of the control shaft 10 about the axis C and of the hub 15 about the axis D is constant, equal to one in the case shown, for each angular position of the control shaft 10 or of the hub 15 relative to the respective axes C, D.

The joint 20 performs the following functions:
- allows the oscillation of the axis D relative to the axis C so that the oscillation of the axis E relative to the axis F is equal to the angle α between 0 degrees (Figure 2) and, in the case shown, 12 degrees (Figure 3). This oscillation is due to the fact that the aerodynamic forces acting on the blades 17 are hardly ever perfectly symmetrical, for example due to a gust of wind or from the variation of the cyclic pitch of the blades 17 themselves. These non-symmetrical forces are also generated during the transition of the tilt-rotor aircraft 1 between the "airplane" and "helicopter" configurations or due to the gyroscopic forces generated in the event of storms acting on the blades 17;

- enables the transmission of the aerodynamic force parallel to the axis D from the blades 17 to the fuselage 2; and
- enables the transmission of the driving torque of axis C from the control shaft 10 to the blades 17.

In greater detail, the control shaft 10 drives the element 45 to rotate and, thus, the rollers 54 about the axis C.

The rotation of the rollers 54 about the axis C determines, due to the circumferential contact at the axes B, C between dampening elements 49 and respective surfaces 59 of the corresponding chambers 53, the rotation of the assembly 50 about the axis D.

The dampening elements 49 slightly dampen the torsional oscillations of the control shaft 10, hub 15, element 45 and assembly 50.

The assembly 50 drives, in turn, the hub 15 and thus the blades 17 to rotate about the axis D

Thus, the torque with the main component along the axis C is transmitted from the control shaft 10 to the blades 17.

The aerodynamic force generated by the blades 17 is transmitted from the assembly 50 to the control shaft 10 and, therefore, to the fuselage 2, by the action of the surface 65 of the assembly 50 on the surface 55 of the element 45.

At the same time, the surface 65 of the assembly 50 rolls without creeping on the surface 55 of the element 45 about the centre P, allowing the tilt of the axis D of the hub 15 with respect to the axis C of the control shaft 10 by the angle α about the centre P.

During this tilt, the axes Z of the rollers 54 tilt by the angle α relative to the axes E of the arms 56 (Figure 3).

This tilt is stopped when the angle α reaches the maximum threshold value, as the stop elements 95 come into contact against the fixed structure integral with the control shaft 10.

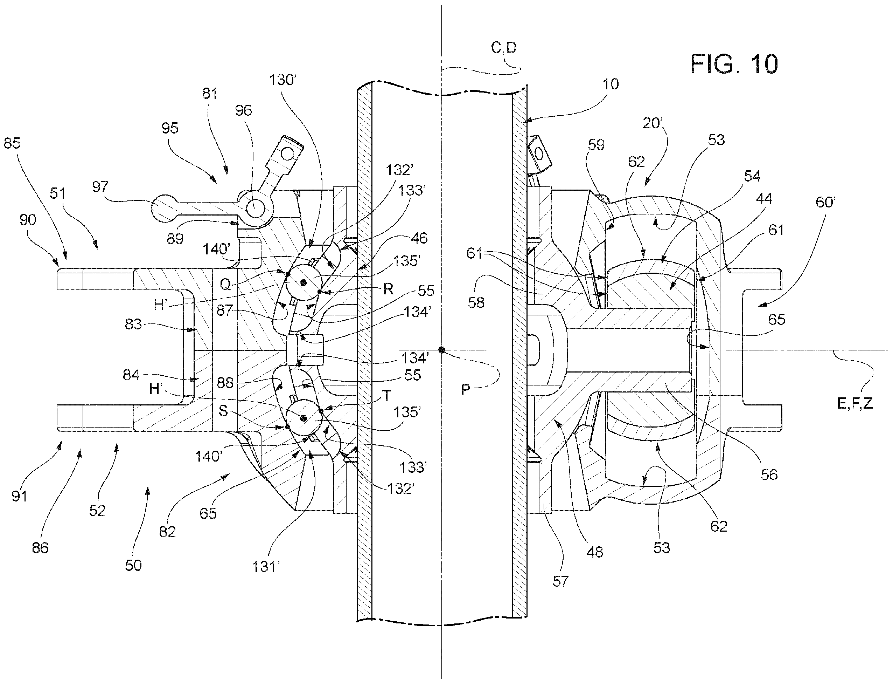

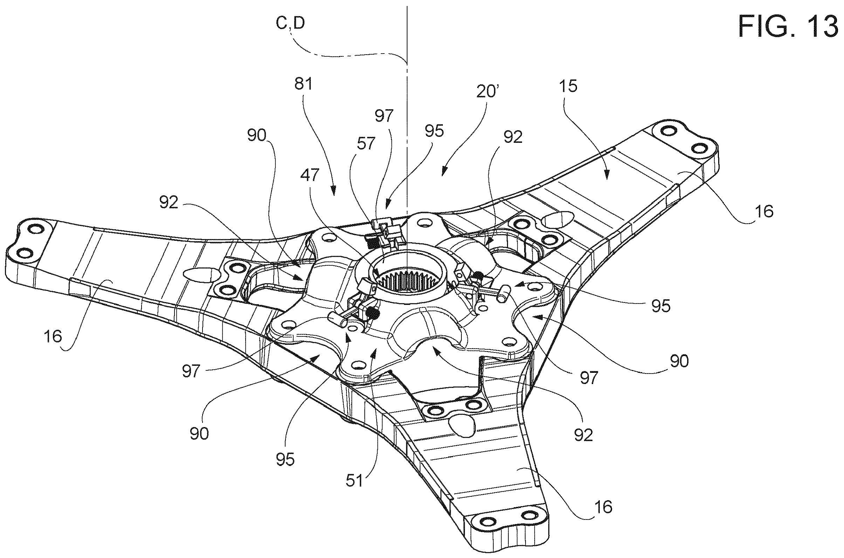

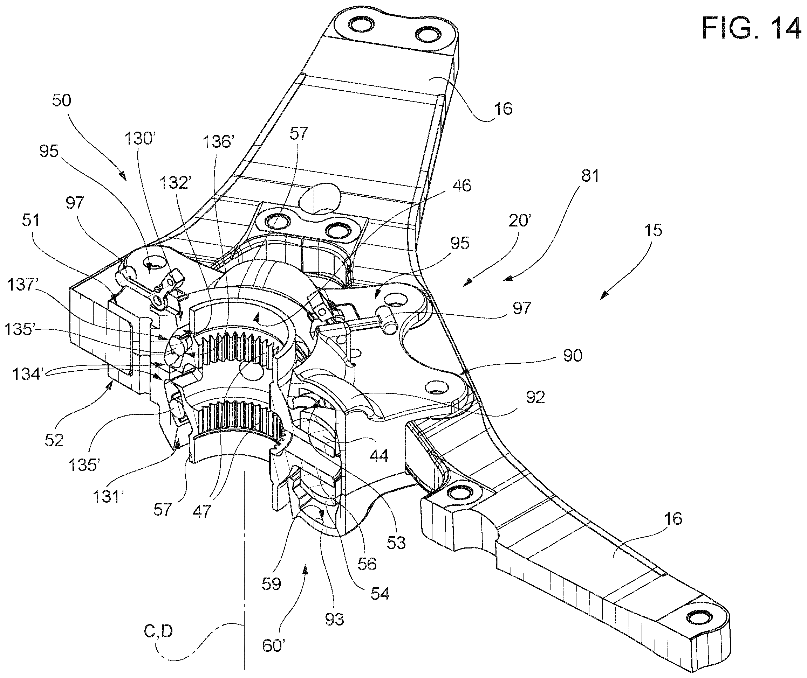

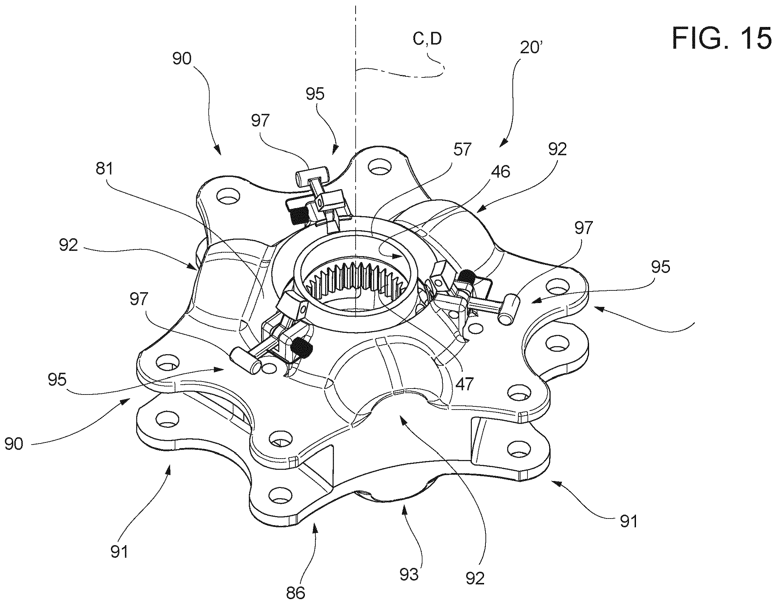

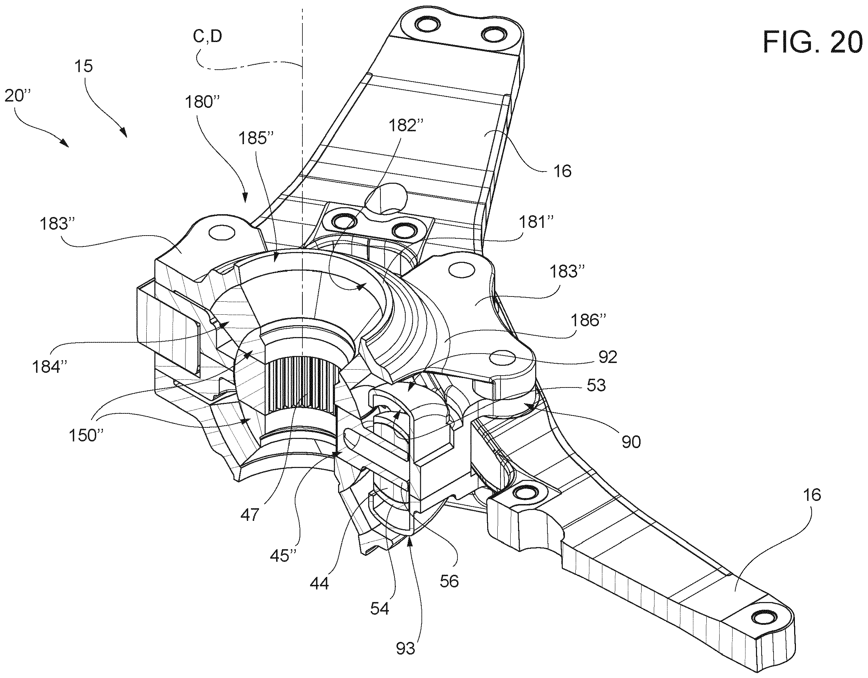

Referring to Figures 10 to 15, 20' denotes a joint according to the present invention.

The joint 20' is similar to the joint 20 and will be described hereinafter only for what differs from the latter; equal or equivalent parts of the joints 20, 20' will be marked, where possible, with the same reference numbers.

The connecting means 60' of the joint 20' differ from the connecting means 60' of the joint 20' in that:
- the element 45' comprises a plurality of grooves 132', eighteen in the embodiment shown, formed in the surface 55 and in the surfaces 87, 88, engaged by respective balls 135' free to roll within the respective grooves 132' maintaining contact with the surface 55 of the element 45' and the respective surfaces 87, 88 of the assembly 50; and
- the surfaces 87, 88 of the respective crankcase 51, 52 are spaced from the surface 55.

The grooves 132' extend along the respective meridians of the surface 55 and surfaces 87, 88, and have, each, respective ends 133', 134' opposite to each other.

The grooves 132' each have a length along their respective meridian and a width measured circumferentially to the axis C.

The length of the grooves 132' is greater than the width of the grooves 132' themselves.

The length of the grooves 132' corresponds to an angle at the centre P equal to twice the maximum value of the angle α.

The width of the grooves 132' corresponds to the diameter of the balls 135'.

The surfaces 87, 88 are spaced from the grooves 132' radially to the axis E by a distance essentially equal to the diameter of the balls 135'.

The balls 135' are free to rotate about their respective axes H' and to roll on the surfaces 87, 88 and the surface 55 within the respective grooves 132' about the point P and between the aforesaid ends 133'.

In greater detail, the joint 20' comprises a plurality of groups 130', 131', six in the case shown, each formed by a plurality, three in the case shown, of grooves 132' circumferentially equally-spaced about the axis C.

Each groove 132' of the group 130' has a length along the same meridian of a corresponding groove 132' of the group 131'.

Each groove 132' has a pair of end edges 136', 137' circumferentially opposed to each other at axes C, D and interposed between the ends 133', 134'.

The groups 130' (131') are angularly equally-spaced about the axis C and circumferentially interposed between respective rollers 34.

Each group 130' and the relative grooves 132' are arranged symmetrically with respect to a corresponding group 131' and the relative grooves 132', with reference to an equatorial median plane of the element 45' parallel to the axis E and orthogonal to the axis C.

The balls 135' of the groups 130' roll without creeping on the surfaces 87, 55 at the respective contact points Q, R.

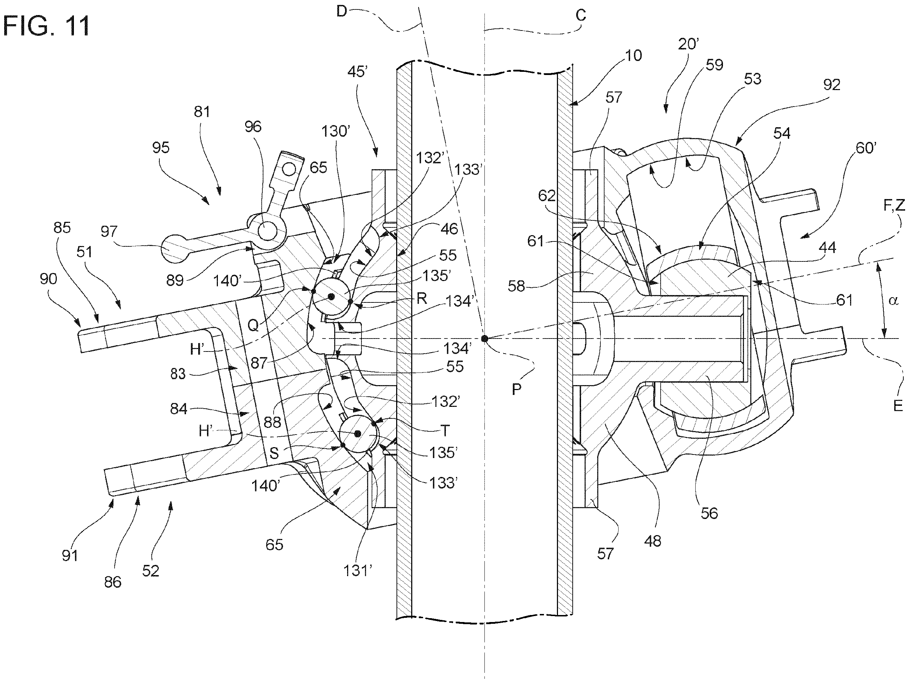

Referring to a first direction - oriented from the top downwards in Figures 10 and 11 - of travel along the axis D, the contact points Q of the balls 135' of the groups 130' are arranged upstream - at the top in Figures 10 and 11 - of the contact points R.

Consequently, the balls 135' of the groups 130' transmit a force having a component along the axis D and oriented along the first direction from the hub 15 and the assembly 50 to the element 45' and the control shaft 10.

The balls 135' of the groups 131' roll without creeping on the surfaces 88, 55 at the respective contact points S, T.

With reference to a second direction opposite to the first direction - oriented from the bottom upwards in Figures 10 and 11 - of travel of the axis D, the contact points S of the balls 135' of the groups 131' are arranged upstream - at the bottom in Figures 10 and 11 - of the contact points T.

Consequently, the balls 135' of the groups 131' transmit a force having a component along the axis D and oriented along the second direction from the hub 15 and the assembly 50 to the element 45' and the control shaft 10.

The joint 20' further comprises a plurality, six in the case shown, of cages 140' adapted to guide the balls 135' of a respective group 130', 131'.

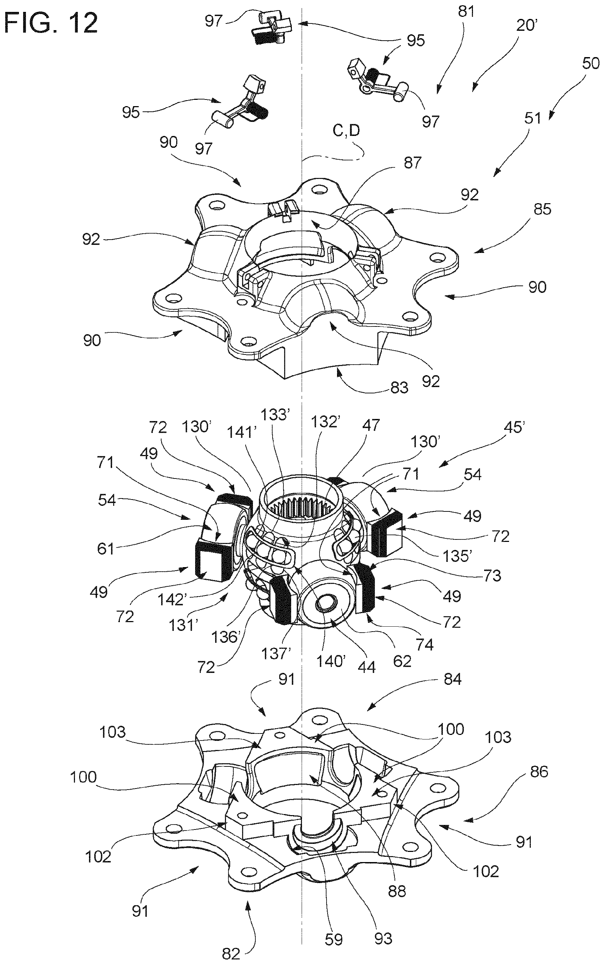

Referring to Figure 12, each cage 140' has an annular shape and is delimited by:
- a pair of edges 141' opposite to each other, arranged circumferentially to the axis C and arranged at a distance corresponding to the radius of the balls 135'; and
- a pair of edges 142' interposed between the edges 141' .

The operation of the joint 20' is described hereinafter only for what differs from the operation of the joint 20.

In particular, the joint 20' transmits the force having a main component along the axis D from the blades 17 to the control shaft 10 by the balls 135' rolling without creeping on the surfaces 87, 88 of the assembly 50 and on the surface 55 of the element 45'.

More precisely, the force having a main component along the axis D and directed along the first direction - oriented from the top downwards in Figures 10 and 11 - is transmitted from the surface 87 to the balls 135' of the groups 130' and from the latter to the surface 55 of the element 45'.

The force having a main component along the axis D and directed along the second direction - oriented from the bottom upwards in Figures 10 and 11 - is transmitted from the surface 88 to the balls 135' of the groups 131' and from the latter to the surface 55 of the element 45'.

The joint 20' also allows the tilt of the hub 15 and, therefore, of the assembly 50 with respect to the control shaft 10 and, therefore, to the element 45', by means of the rolling without creeping of the balls 135' about the respective axes H' on the surfaces 87, 88 of the assembly 50 and on the surface 55 of the element 45' within the respective grooves 132' and about the point P.

In particular, when the axis D of the hub 15 tilts to one side of the axis C of the control shaft 10, the balls 135' move closer to the respective ends 133' of the grooves 132'.

Otherwise, when the axis D of the hub 15 tilts to the other side of the axis C, the balls 135' move closer to the respective ends 134' of the respective grooves 132'.

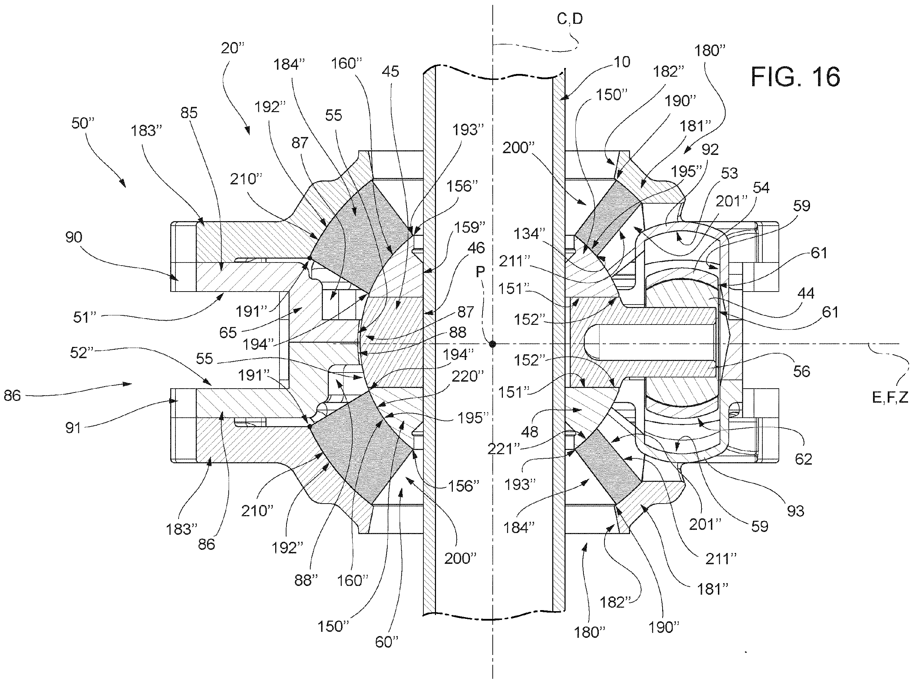

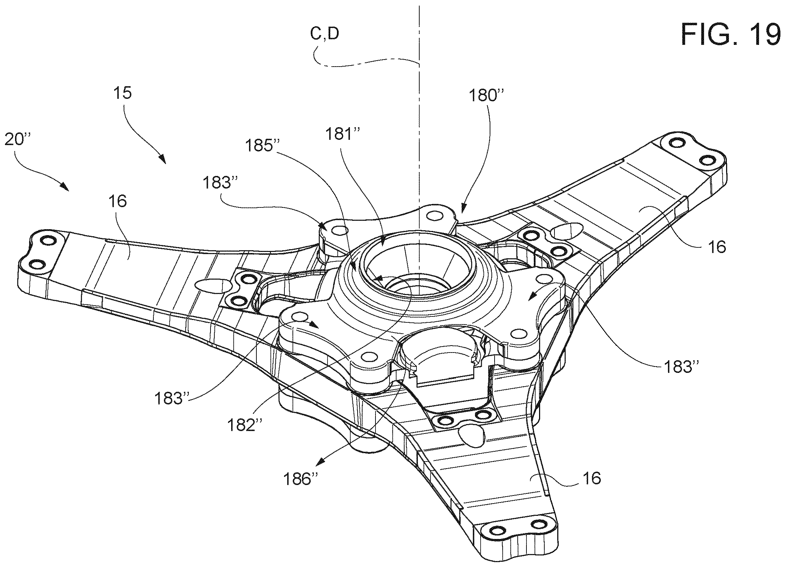

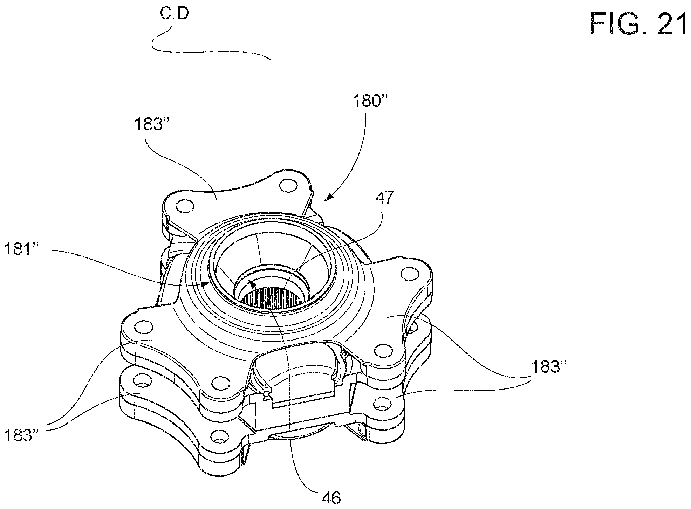

Referring to Figures 16 to 21, 20" denotes a joint according to a further embodiment, which is not part of the present invention.

The joint 20'' is similar to the joint 20 and will be described hereinafter only for what differs from the latter; equal or equivalent parts of the joints 20, 20" will be marked, where possible, with the same reference numbers.

The joint 20" differs from the joint 20 in that the crankcases 51", 52'' do not include the respective portions 81, 82.

The joint 20" also differs from the joint 20" in that it comprises a pair of tubular bodies 150" between which the element 45" is axially interposed along the axis C.

The bodies 150" are housed within the assembly 50" and are shaped like respective hollow spherical caps.

The bodies 150" each have:
- an axial end surface 151" arranged in abutment against the element 45" and delimited by a circular edge 152" radially external to the axis C;
- an edge 156" of axial end opposite to the edge 152'', circular and radially internal to the axis C; and
- a side surface 160" extending axially between the edges 152", 156'', radially external to the axes C, D and having decreasing diameters proceeding from the edge 152''' towards the edge 156'' parallel to the axis C.

The surfaces 160" define respective axial extensions of the surface 55 and are designed as respective portions of spherical surfaces with a centre P.

The bodies 150" also define respective cylindrical seats 159" of axis C, which are contiguous to the seat 46 and defining respective axial extensions of the seat 46.

In particular, the diameter of the edge 152" is larger than the diameter of the edge 156".

The diameters of the edges 152" are equal to each other and the diameters of the edges 156" are equal to each other.

The joint 20" also differs from the joint 20 in that the surfaces 87, 88 of the crankcases 51, 52 are spaced from the element 45" and from the bodies 150".

The joint 20" also differs from the joint 20 in that it comprises:
- a pair of lids 180" arranged on axially opposite sides of the element 45" and connected to the hub 15 so as to be rotatable integrally with the hub 15 about the axis D; and
- a pair of elastomeric elements 184" axially interposed, each, between a relative lid 180" and a relative body 150".

In greater detail, each lid 180'' is tubular with respect to the axis D and is connected to a respective crankcase 51", 52".

The elastomeric elements 184" are each interposed between a relative lid 180'' and a relative body 150".

Each lid 180" further comprises:
- a flange 181'' defining a seat 182; and
- a plurality, three in the case shown, of arms 183" projecting radially cantilevered from the flange 181'' in the opposite direction to the axis D and connected to respective attachment elements 90, 91 of the relevant crankcase 51, 52.

The flange 181" comprises a circular end 185" and an end 186" axially opposite to the end 185'' and from which the arms 183" protrude in a cantilevered way.

The end 186" of each flange 181" is formed as a plurality of arcs of circumference with a centre on the axis D alternating with respective arms 183'', along a direction circumferential to the axis D.

Each flange 181" has radial dimensions increasing with respect to the axis D, proceeding from the respective end 185'' to the respective end 186".

The end 185'' is circular and with a diameter smaller than the end 186".

Each elastomeric element 184" comprises, in turn:
- a circular edge 190" with axial end;
- an edge 191'' axially opposite to the edge 190"; and
- a side surface 192" radially external and axially delimited by the edges 190", 191".

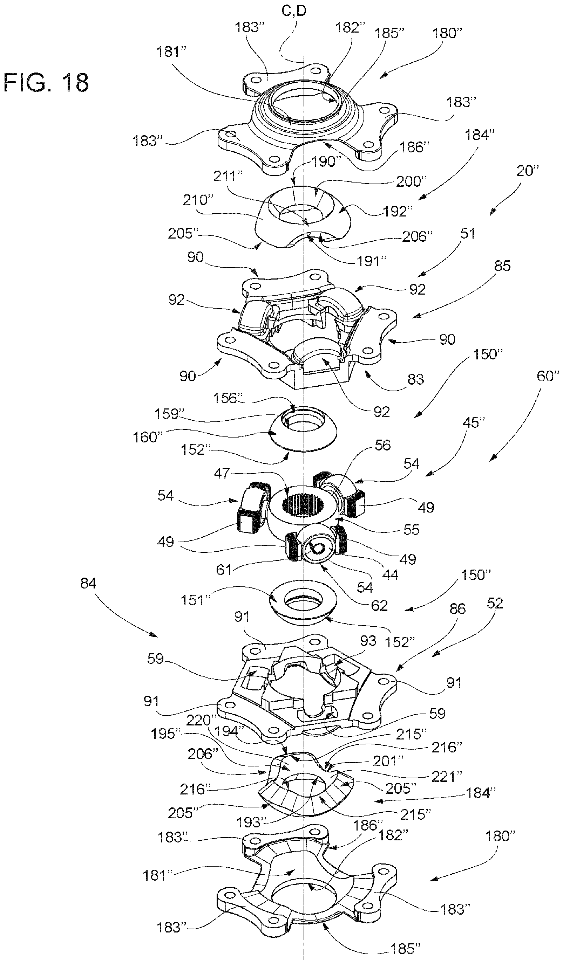

The edge 191'' comprises, in turn (Figure 18):
- a plurality, three in the case shown, of arcs of circumference 205'' with the centre on the axis D;
- a plurality, three in the case shown, of linking sections 206" circumferentially alternating to the arcs 205'', having the concavity facing opposite the edge 190", and extending symmetrically at axial distances firstly increasing and then decreasing from the arcs 205" proceeding in a circumferential direction to the axis D.

The side surface 192" is shaped as a portion of a spherical surface with a centre P and comprises, in the case shown in Figure 18:
- a plurality, three in the case shown, of main portions 210" (only one of which is shown in Figure 18) and extending, each, between the edge 190'' and a relative arc 205''; and
- a plurality, three in the case shown, of linking portions 211" (only one of which is shown in Figure 18) circumferentially alternating with respective main portions 210" and extending, each, between the edge 190" and a related section 206".

Each elastomeric element 184" further comprises:
- a circular edge 193", radially internal to the edges 190", 191";
- an edge axially opposite 194'' and radially external to the edge 193", and radially internal to the edge 191''; and
- a side surface 195'' radially internal and axially delimited by the edges 193", 194''.

The edge 194'' comprises, in turn:
- a plurality, three in the case shown, of arcs of circumference 215'' with the centre on the axis D;
- a plurality, three in the case shown, of linking sections 216" circumferentially alternating to the arcs 215'', having the concavity facing opposite the edge 190", and extending symmetrically at axial distances firstly increasing and then decreasing from the arcs 215" proceeding in a circumferential direction to the axis D.

The side surface 195'' is shaped as a portion of a spherical surface with a centre P and comprises, in the case shown in Figure 18:
- a plurality, three in the case shown, of main portions 220" (only one of which is shown in Figure 18) and extending, each, between the edge 193'' and a relative arc 215"; and
- a plurality, three in the case shown, of linking portions 221" (only one of which is shown in Figure 18) circumferentially alternating with respective main portions 220" and extending, each, between the edge 193" and a related section 216".

The main portions 210", 211"; the linking portions 220", 221"; the arcs 205", 215"; and the sections 206", 216" are arranged circumferentially to the axes C, D, when the elastomeric element 184" is undeformed.

Finally, each elastomeric element 184" finally comprises:
- an axial end surface 200'', which extends between the edges 190'', 193"; and
- an axial end surface 201" opposite the surface 200'' and extending between the edges 191'', 194''.

In greater detail, the elastomeric elements 184" have their respective edges 194" facing each other and interposed axially between the edges 193".

The surface 192" of each elastomeric element 184" is pressed against the surface 182" of the respective lid 180''.

The surface 195" of each elastomeric element 184" is pressed against the surface 160" of the corresponding body 150".

The surfaces 195'' comprise, in particular, respective portions interposed axially between respective portions of the surfaces 192", so as to allow transmitting a force having a main component parallel to the axis D in both directions from the hub 15 to the control shaft 10.

The joint 20" also differs from the joint 20 in that it does not include the stop elements 95.

The operation of the joint 20" is described hereinafter only for what differs from the operation of the joint 20.

In particular, the joint 20" transmits the force having a main component along the axis D from the blades 17 to the control shaft 10 via the elastomeric elements 184" having respective surfaces 192" angularly integral with the hub 15 and the blades 17 about the axis D and respective surfaces 195" angularly integral with the control shaft 10 about the axis C.

The elastomeric elements 184" also transmit a residual portion of the driving torque with the main component along the axis C.

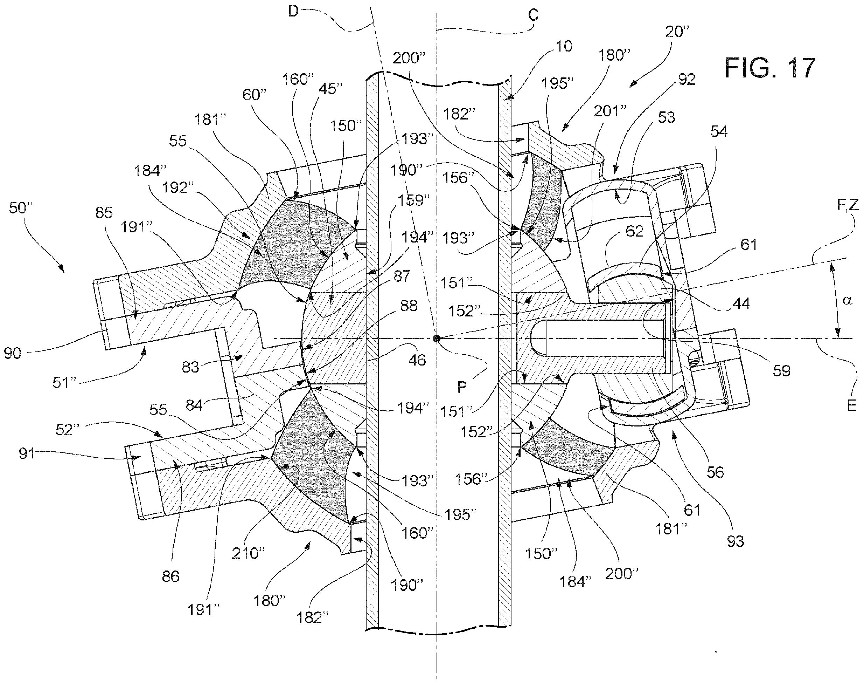

The elastomeric elements 184" further allow, by means of elastic deformation, the tilt of the hub 15 and, therefore, of the assembly 50 with respect to the control shaft 10 and, therefore, to the element 45, by means of the relative elastic deformation between a substantially torsionally undeformed position assumed when the axes C, D match with each other (Figure 16) and a torsionally deformed position assumed when the axes C, D are tilted with respect to each other (Figure 17).

After examining the transmission joint 20'made according to the present invention the advantages it allows to be obtained are evident.

In particular, the joints 20'transmit the torque from the control shaft 10 to the hub 15 by the action of the rollers 54 on the surfaces 59 of the respective chambers 53 in a direction circumferential to the axis C. By contrast, the aerodynamic force is transmitted from the blades 17 and the hub 15 to the control shaft 10 by coupling the balls 135' and the surfaces 55; 87, 88 in the joint 20'.

As a result, the transmission paths of the torque of axis C and of the force of axis D are independent and distinct from each other, unlike the known solutions described in the introductory part of this description.

The joint 20'is thus more balanced, and is cheaper and lighter than the above-mentioned known solution.

The crankcases 51, 52; of the assembly 50 are easily disassembled to allow access to the joint 20'.

The chambers 53 are independent of each other. It is thereby prevented any contamination of the lubricating grease contained in a chamber 53 and/or any failure of the respective roller 54 from impairing the functionality of the other chambers 53 and respective rollers 54.

The rollers 54 and dampening elements 49 are easily detachable and replaceable in the event of wear, without requiring any replacement of the element 45.

The stop elements 95 limit the value of the angle α to the expected threshold value depending on the operating configuration of the tilt-rotor aircraft 1.

The stop elements 95 are arranged in the respective first positions when the tilt-rotor aircraft 1 is in flight.

The stop elements 95 are arranged in the respective second positions when the tilt-rotor aircraft 1 is on the ground.

Due to the fact that the transmission joints 20' do not have any elastomeric material components intended to transmit torque and force, it is not necessary to set up visual inspection procedures that are particularly time-consuming in terms of interruption of the operation of the tilt-rotor aircraft 1.

The resulting joint 20' can have any number of arms 56 so that it can be easily coupled to hubs 15 provided with any number of blades 17.

It is clear that modifications and variations can be made to the joints 20' described and shown herein, without thereby departing from the scope of protection defined by the Claims.

## Claims

1. Transmission joint (20') of the articulated type for connecting a drive shaft (10) to a hub (15) of a rotor (8'), comprising:
- a first element (45') rotatable about a first axis (C) and connectable in an angularly fixed manner to said drive shaft (10) about said first axis (C);
- a second element (50, 51, 52) rotatable about a second axis (D) and connectable in an angularly fixed manner to said hub (15); and
- connecting means (60') adapted to connect said first element (45') and said second element (50, 51, 52) and configured to allow, in use, the transmission between said first and second elements (45'; 50, 51, 52) of a torque having a main component along said first axis (C) and of a force having a main component along said second axis (D);
said first axis (C) and second axis (D) being incident at a first point (P);
said connecting means (60') comprising, in turn:
- at least one roller (54) carried by said first element (45') and extending along a further axis (Z) tiltable with respect to said first axis (C); and
- at least one chamber (53) defined at least partially by said second element (50, 51, 52) and housing at least partially said roller (54);
said chamber (53) being delimited towards said roller (54) by a first surface (59) adapted to come into contact at least indirectly, in use, with the roller (54) circumferentially to said first axis (C), after the rotation of said first element (45) about said first axis (C) ;
said first and second elements (45'; 50, 51, 52) being coupled to each other so as to allow, in use, a tilt of an angle (α) between said first and second axes (C, D);
**characterised in that** said connecting means (60') comprise, in turn, at least:
- a first rolling body (135') contacting said second surface (55) at a second point (R) and said third surface (65; 87, 88) at a third point (Q), so as to roll about said first point (P) while rotating about a respective fourth axis (H');
- a second rolling body (135') contacting said second surface (55) at a fourth point (T) and said third surface (65; 87, 88) at a fifth point (S), so as to roll about said first point (P) while rotating about a respective further fourth axis (H');
said second and fourth points (R, T) being interposed between said third and fifth points (Q, S) parallel to said second axis (D), so as to allow the transmission of a force directed parallel to said second axis (D) in both directions from said second element (50; 51, 52) to said first element (45).

2. Transmission joint according to Claim 1, **characterised in that** said chamber (53) defines a clearance between said first surface (59) and said roller (54) parallel to said first axis (C).

3. Transmission joint according to Claim 1 or 2, **characterised in that** said first element (45') comprises a plurality of said rollers (54) circumferentially spaced about said first axis (C), and said second element (50, 51, 52) comprises a plurality of said chambers (53) circumferentially spaced about said first axis (C) and associated with respective said rollers (54).

4. Transmission joint according to Claim 3, **characterised in that** said first element (45') comprises, in turn:
- a main body (48) defining a second surface (55) at least partially spherical with the centre at said first point (P); and
- a plurality of arms (56) projecting cantilevered from said main body (48) radially to said first axis (C) and defining respective said chambers (53) for corresponding said rollers (54).

5. Transmission joint according to any one of the preceding Claims, **characterised in that** it comprises two said second elements (51, 52) each defining a relative portion (92; 93) of said chamber (53);
said second elements (51, 52) being releasably connected to each other, connected to said hub (15) and superimposed on each other parallel to said first axis (C) .

6. Joint according to Claim 4 or 5, **characterised in that** said arms (56) extend along respective third axes (E) radial to said first axis (C), and **in that** said first element (45') comprises a plurality of junctions (44) carried by respective arms (56) and on which respective rollers (54) are mounted; said junctions (44) enabling the rotation of respective said rollers (54) about said third axis (E) and the tilt of fourth axes (Z) of said rollers (54) with respect to respective said third axes (E) .

7. Joint according to any one of the preceding Claims, **characterised in that** it comprises dampening means (49) circumferentially interposed with respect to said first axis (C) between said roller (54) and said first surface (59) of said chamber (53).

8. Joint according to any one of the preceding Claims, **characterised in that** said second element (51, 52) comprises a plurality of stop elements (95) configured to abut, in use, against a structure angularly integral with said first element (45'), so as to limit said tilt between said first and second axes (C, D).

9. Joint according to Claim 8, **characterised in that** said stop elements (95) are selectively movable between:
- a first position wherein the respective abutment elements (97) define a first angle with said second axis (D); and
- a second position wherein said respective abutment elements (97) define a second, lower angle of said first angle with said second axis (D).

10. Joint according to any one of the foregoing claims, **characterised in that** at least one of said second surface (55) and said third surface (87, 88) comprises a plurality of grooves (132') elongated along respective meridians and spaced circumferentially to said first axis (C) ;
said first and second rolling bodies (135') engaging said grooves (132').

11. A tilt-rotor aircraft (1) **characterized in that** it comprises:
- a fuselage (2) extending along a fifth axis (A);
- a pair of half-wings (3) extending from respective side bands opposite to each other of said fuselage (2);
- a pair of rotors (8') associated with said half-wings (3) and tilted about a sixth axis (G) orthogonal to said first and fifth axes (C, A) between:
a first position wherein said second axes (D) are parallel to said fifth axis (A), which position is reached when said tilt-rotor aircraft (1) is, in use, in an airplane configuration; and
a second position wherein said second axes (D) are orthogonal to said fifth axis (A), which position is reached when said tilt-rotor aircraft (1) is, in use, in a helicopter configuration;
each said rotor (8') comprising, in turn:
a relative said drive shaft (10);
a relative said hub (15) on which a plurality of respective blades (16) are articulated; and
a relative articulated transmission joint (20') according to any one of the preceding Claims.

## Amended claims

### Amended claims in accordance with Rule 137(2) EPC.

**1.** Transmission joint (20') of the articulated type for connecting a drive shaft (10) to a hub (15) of a rotor (8'), comprising:
- a first element (45') rotatable about a first axis (C) and connectable in an angularly fixed manner to said drive shaft (10) about said first axis (C);
- a second element (50, 51, 52) rotatable about a second axis (D) and connectable in an angularly fixed manner to said hub (15); and
- connecting means (60') adapted to connect said first element (45') and said second element (50, 51, 52) and configured to allow, in use, the transmission between said first and second elements (45'; 50, 51, 52) of a torque having a main component along said first axis (C) and of a force having a main component along said second axis (D);
said first axis (C) and second axis (D) being incident at a first point (P);
said connecting means (60') comprising, in turn:
- at least one roller (54) carried by said first element (45') and extending along a further axis (Z) tiltable with respect to said first axis (C); and
- at least one chamber (53) defined at least partially by said second element (50, 51, 52) and housing at least partially said roller (54);
said chamber (53) being delimited towards said roller (54) by a first surface (59) adapted to come into contact indirectly, in use, with the roller (54) circumferentially to said first axis (C), after the rotation of said first element (45) about said first axis (C) ;
said first and second elements (45'; 50, 51, 52) being coupled to each other so as to allow, in use, a tilt of an angle (α) between said first and second axes (C, D);
**characterised in that** said connecting means (60') comprise, in turn, at least:
- a first rolling body (135') contacting a second surface (55) at a second point (R) and a third surface (65; 87, 88) at a third point (Q), so as to roll about said first point (P) while rotating about a respective fourth axis (H');
- a second rolling body (135') contacting said second surface (55) at a fourth point (T) and said third surface (65; 87, 88) at a fifth point (S), so as to roll about said first point (P) while rotating about a respective further fourth axis (H');
said second and fourth points (R, T) being interposed between said third and fifth points (Q, S) parallel to said second axis (D), so as to allow the transmission of a force directed parallel to said second axis (D) in both directions from said second element (50; 51, 52) to said first element (45);
said dampening means (49) comprising at least one dampening element (49) circumferentially interposed with respect to said second axis (D) between said roller (54) and said chamber (53);
said dampening element (49) being in circumferential contact around said first and second axis (C, D) with said surface (59) of said chamber (53).

**2.** Transmission joint according to Claim 1, **characterised in that** said chamber (53) defines a clearance between said first surface (59) and said roller (54) parallel to said first axis (C).

**3.** Transmission joint according to Claim 1 or 2, **characterised in that** said first element (45') comprises a plurality of said rollers (54) circumferentially spaced about said first axis (C), and said second element (50, 51, 52) comprises a plurality of said chambers (53) circumferentially spaced about said first axis (C) and associated with respective said rollers (54).

**4.** Transmission joint according to Claim 3, **characterised in that** said first element (45') comprises, in turn:
- a main body (48) defining a second surface (55) at least partially spherical with the centre at said first point (P); and
- a plurality of arms (56) projecting cantilevered from said main body (48) radially to said first axis (C) and defining respective said chambers (53) for corresponding said rollers (54).

**5.** Transmission joint according to any one of the preceding Claims, **characterised in that** it comprises two said second elements (51, 52) each defining a relative portion (92; 93) of said chamber (53);
said second elements (51, 52) being releasably connected to each other, connected to said hub (15) and superimposed on each other parallel to said first axis (C) .

**6.** Joint according to Claim 4 or 5, **characterised in that** said arms (56) extend along respective third axes (E) radial to said first axis (C), and **in that** said first element (45') comprises a plurality of junctions (44) carried by respective arms (56) and on which respective rollers (54) are mounted; said junctions (44) enabling the rotation of respective said rollers (54) about said third axis (E) and the tilt of fourth axes (Z) of said rollers (54) with respect to respective said third axes (E) .

**7.** Joint according to any one of the preceding Claims, **characterised in that** it comprises dampening means (49) circumferentially interposed with respect to said first axis (C) between said roller (54) and said first surface (59) of said chamber (53).

**8.** Joint according to any one of the preceding Claims, **characterised in that** said second element (51, 52) comprises a plurality of stop elements (95) configured to abut, in use, against a structure angularly integral with said first element (45'), so as to limit said tilt between said first and second axes (C, D).

**9.** Joint according to Claim 8, **characterised in that** said stop elements (95) are selectively movable between:
- a first position wherein the respective abutment elements (97) define a first angle with said second axis (D); and
- a second position wherein said respective abutment elements (97) define a second, lower angle of said first angle with said second axis (D).

**10.** Joint according to any one of the foregoing claims, **characterised in that** at least one of said second surface (55) and said third surface (87, 88) comprises a plurality of grooves (132') elongated along respective meridians and spaced circumferentially to said first axis (C) ;
said first and second rolling bodies (135') engaging said grooves (132').

**11.** A tilt-rotor aircraft (1) **characterized in that** it comprises:
- a fuselage (2) extending along a fifth axis (A);
- a pair of half-wings (3) extending from respective side bands opposite to each other of said fuselage (2);
- a pair of rotors (8') associated with said half-wings (3) and tilted about a sixth axis (G) orthogonal to said first and fifth axes (C, A) between:
a first position wherein said second axes (D) are parallel to said fifth axis (A), which position is reached when said tilt-rotor aircraft (1) is, in use, in an airplane configuration; and
a second position wherein said second axes (D) are orthogonal to said fifth axis (A), which position is reached when said tilt-rotor aircraft (1) is, in use, in a helicopter configuration;
each said rotor (8') comprising, in turn:
a relative said drive shaft (10);
a relative said hub (15) on which a plurality of respective blades (16) are articulated; and
a relative articulated transmission joint (20') according to any one of the preceding Claims.

**1.** Transmission joint (20') of the articulated type for connecting a drive shaft (10) to a hub (15) of a rotor (8'), comprising:
- a first element (45') rotatable about a first axis (C) and connectable in an angularly fixed manner to said drive shaft (10) about said first axis (C);
- a second element (50, 51, 52) rotatable about a second axis (D) and connectable in an angularly fixed manner to said hub (15); and
- connecting means (60') adapted to connect said first element (45') and said second element (50, 51, 52) and configured to allow, in use, the transmission between said first and second elements (45'; 50, 51, 52) of a torque having a main component along said first axis (C) and of a force having a main component along said second axis (D);
said first axis (C) and second axis (D) being incident at a first point (P);
said connecting means (60') comprising, in turn:
- at least one roller (54) carried by said first element (45') and extending along a further axis (Z) tiltable with respect to said first axis (C); and
- at least one chamber (53) defined at least partially by said second element (50, 51, 52) and housing at least partially said roller (54);
said chamber (53) being delimited towards said roller (54) by a first surface (59) adapted to come into contact indirectly, in use, with the roller (54) circumferentially to said first axis (C), after the rotation of said first element (45) about said first axis (C) ;
said first and second elements (45'; 50, 51, 52) being coupled to each other so as to allow, in use, a tilt of an angle (α) between said first and second axes (C, D);
**characterised in that** said connecting means (60') comprise, in turn, at least:
- a first rolling body (135') contacting a second surface (55) at a second point (R) and a third surface (65; 87, 88) at a third point (Q), so as to roll about said first point (P) while rotating about a respective fourth axis (H');
- a second rolling body (135') contacting said second surface (55) at a fourth point (T) and said third surface (65; 87, 88) at a fifth point (S), so as to roll about said first point (P) while rotating about a respective further fourth axis (H');
said second and fourth points (R, T) being interposed between said third and fifth points (Q, S) parallel to said second axis (D), so as to allow the transmission of a force directed parallel to said second axis (D) in both directions from said second element (50; 51, 52) to said first element (45);
said dampening means (49) comprising at least one dampening element (49) circumferentially interposed with respect to said second axis (D) between said roller (54) and said chamber (53);
said dampening element (49) being in circumferential contact around said first and second axis (C, D) with said surface (59) of said chamber (53);
said dampening element (49) comprising, in turn:
- a concave first wall (71) partially housing said roller 54 and radially internal with respect to a third axis (E) radial to said first axis (C);
- a second wall (72) opposite said wall (71) and radially external to said third axis (E); and
- a pair of third walls (73, 74) interposed between said first and second walls (71, 72), opposite to each other, and lying on respective planes orthogonal to said third axis (E) of said roller (54);
said first wall (71) of said dampening element (49) defining a rolling track for the corresponding said roller (54) .

**2.** Transmission joint according to Claim 1, **characterised in that** said chamber (53) defines a clearance between said first surface (59) and said roller (54) parallel to said first axis (C).

**3.** Transmission joint according to Claim 1 or 2, **characterised in that** said first element (45') comprises a plurality of said rollers (54) circumferentially spaced about said first axis (C), and said second element (50, 51, 52) comprises a plurality of said chambers (53) circumferentially spaced about said first axis (C) and associated with respective said rollers (54).

**4.** Transmission joint according to Claim 3, **characterised in that** said first element (45') comprises, in turn:
- a main body (48) defining a second surface (55) at least partially spherical with the centre at said first point (P); and
- a plurality of arms (56) projecting cantilevered from said main body (48) radially to said first axis (C) and defining respective said chambers (53) for corresponding said rollers (54).

**5.** Transmission joint according to any one of the preceding Claims, **characterised in that** it comprises two said second elements (51, 52) each defining a relative portion (92; 93) of said chamber (53);
said second elements (51, 52) being releasably connected to each other, connected to said hub (15) and superimposed on each other parallel to said first axis (C) .

**6.** Joint according to Claim 4 or 5, **characterised in that** said arms (56) extend along respective third axes (E) radial to said first axis (C), and **in that** said first element (45') comprises a plurality of junctions (44) carried by respective arms (56) and on which respective rollers (54) are mounted; said junctions (44) enabling the rotation of respective said rollers (54) about said third axis (E) and the tilt of fourth axes (Z) of said rollers (54) with respect to respective said third axes (E) .

**7.** Joint according to any one of the preceding Claims, **characterised in that** it comprises dampening means (49) circumferentially interposed with respect to said first axis (C) between said roller (54) and said first surface (59) of said chamber (53).

**8.** Joint according to any one of the preceding Claims, **characterised in that** said second element (51, 52) comprises a plurality of stop elements (95) configured to abut, in use, against a structure angularly integral with said first element (45'), so as to limit said tilt between said first and second axes (C, D).

**9.** Joint according to Claim 8, **characterised in that** said stop elements (95) are selectively movable between:
- a first position wherein the respective abutment elements (97) define a first angle with said second axis (D); and
- a second position wherein said respective abutment elements (97) define a second, lower angle of said first angle with said second axis (D).

**10.** Joint according to any one of the foregoing claims, **characterised in that** at least one of said second surface (55) and said third surface (87, 88) comprises a plurality of grooves (132') elongated along respective meridians and spaced circumferentially to said first axis (C) ;
said first and second rolling bodies (135') engaging said grooves (132').

**11.** A tilt-rotor aircraft (1) **characterized in that** it comprises:
- a fuselage (2) extending along a fifth axis (A);
- a pair of half-wings (3) extending from respective side bands opposite to each other of said fuselage (2);
- a pair of rotors (8') associated with said half-wings (3) and tilted about a sixth axis (G) orthogonal to said first and fifth axes (C, A) between:
a first position wherein said second axes (D) are parallel to said fifth axis (A), which position is reached when said tilt-rotor aircraft (1) is, in use, in an airplane configuration; and
a second position wherein said second axes (D) are orthogonal to said fifth axis (A), which position is reached when said tilt-rotor aircraft (1) is, in use, in a helicopter configuration;
each said rotor (8') comprising, in turn:
a relative said drive shaft (10);
a relative said hub (15) on which a plurality of respective blades (16) are articulated; and
a relative articulated transmission joint (20') according to any one of the preceding Claims.

**1.** Transmission joint (20') of the articulated type for connecting a drive shaft (10) to a hub (15) of a rotor (8'), comprising:
- a first element (45') rotatable about a first axis (C) and connectable in an angularly fixed manner to said drive shaft (10) about said first axis (C);
- a second element (50, 51, 52) rotatable about a second axis (D) and connectable in an angularly fixed manner to said hub (15); and
- connecting means (60') adapted to connect said first element (45') and said second element (50, 51, 52) and configured to allow, in use, the transmission between said first and second elements (45'; 50, 51, 52) of a torque having a main component along said first axis (C) and of a force having a main component along said second axis (D);
said first axis (C) and second axis (D) being incident at a first point (P);
said connecting means (60') comprising, in turn:
- at least two rollers (54) carried by said first element (45') and extending along respective further axes (Z) tiltable with respect to said first axis (C); and
- at least two chambers (53) defined at least partially by said second element (50, 51, 52) and housing at least partially respective said rollers (54);
each said chamber (53) being delimited towards said roller (54) by a first surface (59) adapted to come into contact indirectly, in use, with relative said roller (54) circumferentially to said first axis (C), after the rotation of said first element (45) about said first axis (C) ;
said first and second elements (45'; 50, 51, 52) being coupled to each other so as to allow, in use, a tilt of an angle (α) between said first and second axes (C, D);
**characterised in that** said connecting means (60') comprise, in turn, at least:
- a first rolling body (135') contacting a second surface (55) at a second point (R) and a third surface (65; 87, 88) at a third point (Q), so as to roll about said first point (P) while rotating about a respective fourth axis (H');
- a second rolling body (135') contacting said second surface (55) at a fourth point (T) and said third surface (65; 87, 88) at a fifth point (S), so as to roll about said first point (P) while rotating about a respective further fourth axis (H');
said second and fourth points (R, T) being interposed between said third and fifth points (Q, S) parallel to said second axis (D), so as to allow the transmission of a force directed parallel to said second axis (D) in both directions from said second element (50; 51, 52) to said first element (45);
said dampening means (49) comprising a pair of dampening elements (49) circumferentially interposed with respect to said second axis (D) between corresponding said roller (54) and corresponding said chamber (53);
said dampening elements (49) being in circumferential contact around said first and second axis (C, D) with said surface (59) of said chambers (53);
each said dampening element (49) comprising, in turn:
- a concave first wall (71) partially housing said roller 54 and radially internal with respect to a third axis (E) radial to said first axis (C);
- a second wall (72) opposite said wall (71) and radially external to said third axis (E); and
- a pair of third walls (73, 74) interposed between said first and second walls (71, 72), opposite to each other, and lying on respective planes orthogonal to said third axis (E) of respective said roller (54);
said first wall (71) of each dampening element (49) defining a rolling track for the corresponding said roller (54) .

**2.** Transmission joint according to Claim 1, **characterised in that** said chamber (53) defines a clearance between said first surface (59) and said roller (54) parallel to said first axis (C).

**3.** Transmission joint according to Claim 1 or 2, **characterised in that** said first element (45') comprises a plurality of said rollers (54) circumferentially spaced about said first axis (C), and said second element (50, 51, 52) comprises a plurality of said chambers (53) circumferentially spaced about said first axis (C) and associated with respective said rollers (54).

**4.** Transmission joint according to Claim 3, **characterised in that** said first element (45') comprises, in turn:
- a main body (48) defining a second surface (55) at least partially spherical with the centre at said first point (P); and
- a plurality of arms (56) projecting cantilevered from said main body (48) radially to said first axis (C) and defining respective said chambers (53) for corresponding said rollers (54).

**5.** Transmission joint according to any one of the preceding Claims, **characterised in that** it comprises two said second elements (51, 52) each defining a relative portion (92; 93) of said chamber (53);
said second elements (51, 52) being releasably connected to each other, connected to said hub (15) and superimposed on each other parallel to said first axis (C) .

**6.** Joint according to Claim 4 or 5, **characterised in that** said arms (56) extend along respective third axes (E) radial to said first axis (C), and **in that** said first element (45') comprises a plurality of junctions (44) carried by respective arms (56) and on which respective rollers (54) are mounted; said junctions (44) enabling the rotation of respective said rollers (54) about said third axis (E) and the tilt of fourth axes (Z) of said rollers (54) with respect to respective said third axes (E) .

**7.** Joint according to any one of the preceding Claims, **characterised in that** it comprises dampening means (49) circumferentially interposed with respect to said first axis (C) between said roller (54) and said first surface (59) of said chamber (53).

**8.** Joint according to any one of the preceding Claims, **characterised in that** said second element (51, 52) comprises a plurality of stop elements (95) configured to abut, in use, against a structure angularly integral with said first element (45'), so as to limit said tilt between said first and second axes (C, D).

**9.** Joint according to Claim 8, **characterised in that** said stop elements (95) are selectively movable between:
- a first position wherein the respective abutment elements (97) define a first angle with said second axis (D); and
- a second position wherein said respective abutment elements (97) define a second, lower angle of said first angle with said second axis (D).

**10.** Joint according to any one of the foregoing claims, **characterised in that** at least one of said second surface (55) and said third surface (87, 88) comprises a plurality of grooves (132') elongated along respective meridians and spaced circumferentially to said first axis (C) ;
said first and second rolling bodies (135') engaging said grooves (132').

**11.** A tilt-rotor aircraft (1) **characterized in that** it comprises:
- a fuselage (2) extending along a fifth axis (A);
- a pair of half-wings (3) extending from respective side bands opposite to each other of said fuselage (2);
- a pair of rotors (8') associated with said half-wings (3) and tilted about a sixth axis (G) orthogonal to said first and fifth axes (C, A) between:
a first position wherein said second axes (D) are parallel to said fifth axis (A), which position is reached when said tilt-rotor aircraft (1) is, in use, in an airplane configuration; and
a second position wherein said second axes (D) are orthogonal to said fifth axis (A), which position is reached when said tilt-rotor aircraft (1) is, in use, in a helicopter configuration;
each said rotor (8') comprising, in turn:
a relative said drive shaft (10);
a relative said hub (15) on which a plurality of respective blades (16) are articulated; and
a relative articulated transmission joint (20') according to any one of the preceding Claims.
